# EUROPEAN PATENT SPECIFICATION

(11) **EP 3 848 679 B1**
(45) Date of publication and mention of the grant of the patent: **25.03.2026**
(21) Application number: 21151414.6
(22) Date of filing: 13.01.2021
(51) Int. Cl.: G01F 15/063, G01D 21/00, G01D 4/00, H04W 4/38

(54) **APPARATUS FOR MEASURING FLUID FLOW**
VORRICHTUNG ZUR MESSUNG DES FLÜSSIGKEITSDURCHFLUSSES
APPAREIL DE MESURE DU DÉBIT D'UN FLUIDE

(30) Priority: 13.01.2020 IT 202000000490
(43) Date of publication of application: 14.07.2021
(73) Proprietor: Pietro Fiorentini S.p.A., 36057 Arcugnano (VI) (IT)
(72) Inventor: CERAMI, Pietro, 20822 Seveso (MB) (IT)
(74) Representative: Braidotti, Andrea

(56) References cited:
- EP-A1- 3 369 452
- WO-A2-2008/033514
- US-A1- 2009 309 755
- US-A1- 2016 076 909
- US-A1- 2018 088 599
- US-A1- 2019 281 371
- US-A1- 2019 363 843

## Description

The present invention relates to an apparatus for measuring a fluid, and in particular of the type suitable for measuring one or more properties of a gas passing through it.

Currently, so-called "Smart Meter" apparatuses - also called "remote managed meters" - are known, which are now widely used to measure (private and industrial) water or gas consumption. In particular, these devices are gradually replacing the traditional meters which limited themselves to measuring gas or water and presenting the measurement result in the format of an incremental totalizer. Appropriately, in fact, the need to comply with increasingly complex measurements, to make the consumer aware of their consumption, to provide detailed billing based on actual consumption, led to the introduction of "smart meters" devices.

One of the peculiar and fundamental characteristics of "smart meters" for gas or water is that of being able to communicate remotely with a central data processing system/unit (called "SAC").

In particular, to this end, the "smart meters" devices are equipped with a communication module configured to send the measured data to an external and remote processing unit.

However, both said communication module and the measuring device of the "smart meter" device must be electrically powered and, for this purpose, the device is equipped with a battery power source. Conveniently, in order to guarantee a long period of operation and autonomy of the apparatus, the time during which the communication/data transmission is active is also necessarily limited. This and other limitations - such as for example the safety requirements for gas meters operating in potentially explosive environments - lead, at present, to consider only some of the various technologies for "smart meter" apparatuses for gas and water wireless communication/data transmission.

Currently, the known communication modules can operate on:
- frequencies or bands (ranges) of "licensed" or "proprietary" frequencies (e.g. GSM, GPRS, LTE, NB-IoT, etc.) that are controlled by a central (government) authority and which can be used (i.e. the transmission or re-transmission of data on that given frequency or frequency band) is permitted only if a corresponding authorization (license) has been granted, generally against payment of a financial contribution, or
- frequencies or bands (ranges) of "free" or "not licensed" frequencies, (such as Wmbus, LoRa, etc.) for the use of which, that is, no authorization is required and no authorization is required and/or payment of any economic contribution is not required.

Each of the aforementioned two modes of communication has advantages and disadvantages which are complementary to each other, in the sense that by choosing a communication mode one generally renounces the advantages offered by the other mode. For example, the communication method that uses "licensed" frequencies relies on networks managed by third party operators specialized in the telecommunications sector and therefore does not require, as in the case of the communication method that uses "free/unlicensed" frequencies, to create expensive and dedicated connection networks. However, the communication method that uses "free/not licensed" frequencies does not require - as in the case of the communication method that uses "licensed" frequencies - contributions and fees, and also potentially allows to reach higher and extended radio coverage levels.

The current legislation relating to "smart meter" devices allows the use of both of the above communication methods.

Currently, the known "smart meter" devices are equipped with a single communication module that is configured and uses only one of the aforementioned communication modes (i.e. either only the communication mode on "licensed" frequencies or only the communication mode on frequencies "Free/not licensed") and the choice of one of these two methods is generally made by the various gas and/or water distributors on the basis of commercial and logistical considerations.

US2016/0076909 and US2019/281371 describe an apparatus for monitoring water use and which comprises first wireless communication means for sending data to a remote display, second wireless communication means for sending data to an external unit/agency and third wireless communication means for sending data in cellular format to a computer or external or remote monitoring unit. Basically, the three wireless communication means of the apparatus are provided for sending data and information to distinct and dedicated receiving units.

US2009/309755 discloses a water meter which comprises a main wireless communication module and a back-up wireless communication module, to be used only in the event that the main wireless communication module becomes unusable, and which uses a different communication than that of the main wireless communication module.

EP3369452 discloses an apparatus for medical treatment, in particular for monitoring oxygen during a therapeutic treatment; the apparatus comprises a control and signal processing module which alternately controls a first modem dedicated to a first radio technology and a second modem dedicated to a second radio technology, different from the first. Conveniently, the apparatus is configured to operate according to a series of transmission protocols, for example, it can provide for transmitting data first by means of the first radio technology and subsequently by means of the second radio technology, or it can periodically perform an analysis of the quality of the radio connection established by sending a test message, or it can select the radio technology to be used once and for all at the time of initialization or installation of the device, or it can send from the outside the command to use one or the other technology radio, or it can send data using one radio technology while the other radio technology is used to periodically send a message without measurement data.

WO2008/033514 describes a meter for water or gas which comprises an RF LAN communication interface, a ZigBee communication interface and optionally a communication module for a third party network.

US2019/363843 discloses a discloses a solution wherein a user equipment (UE) is configured to transmit a capability identifier (capability ID) corresponding to a plurality of capabilities of the UE and such user equipment can comprise redundant circuitry, i.e. dual cellular stack and dual hardware, so that each stack may be used to connect with a different base station and provide redundant access to improve throughput, reliability and latency.

US2018/088599 discloses a gas meter comprising a metrology unit and a separate index unit housing a radio for wireless RF communication and a battery, wherein the index unit can supply power to elements of the metrology unit through an interface and a connector comprising a cable and/or conductor that provides power and communication connections.

The object of the invention is to propose an apparatus for measuring a gas which allows to overcome, at least in part, the aforementioned drawbacks present in traditional solutions.

Another purpose of the invention is to propose a device that has both the advantages offered by the communication method that uses "licensed" frequencies and the advantages offered by the communication method that uses "free/not licensed" frequencies.

Another object of the invention is to propose an apparatus that can operate in various contexts and situations.

Another object of the invention is to propose a device that can be used in areas and installation sites in which the coverage offered by traditional and licensed telecommunications networks is scarce or absent.

Another object of the invention is to propose an apparatus which guarantees a secure and, preferably and/or in some cases, redundant data transmission.

Another object of the invention is to propose an apparatus which allows accurate and punctual monitoring of the conditions of the measured fluid.

Another object of the invention is to propose an apparatus that allows remote and/or proximity monitoring of the properties of the fluid that passes through it.

Another object of the invention is to propose an apparatus which is suitable for use also in installation sites where fixed telecommunications networks/infrastructures are not available.

Another object of the invention is to propose an apparatus which allows to implement both "walk-by" or "drive-by" detection procedures, and remotely.

Another object of the invention is to propose an apparatus that allows the properties of the fluid passing through it to be checked in real time.

Another object of the invention is that of realizing an apparatus which can be powered in a traditional way and, in particular, with a battery which is integrated in the apparatus itself or is associated with the latter.

Another object of the invention is that of realizing an apparatus which is alternative and/or improved with respect to traditional solutions.

Another object of the invention is to propose an apparatus which has high safety standards.

Another object of the invention is to propose an apparatus which can be manufactured simply, quickly and at low costs.

Another object of the invention is to propose an apparatus which has an alternative characterization, both in constructive and functional terms, with respect to traditional ones.

All the purposes mentioned here, considered both individually and in any combination thereof, and others that will emerge from the following description, are achieved, according to the invention, with an apparatus as defined in claim 1.

The present invention is further clarified hereinafter in some of its preferred embodiments reported for purely illustrative and non-limiting purposes with reference to the attached drawings, in which:
- Figure 1: shows a schematic view of a apparatus according to the invention,
- Figure 2: schematically shows the communication of a plurality of apparatus according to the invention and an external remote unit, and
- Figure 3: schematically shows the communication of an apparatus according to the invention with a external portable device.

As can be seen from the figures, the apparatus 1 according to the invention is of the type configured to perform a series of measurements on a fluid 30 - the fluid being a gas - which passes through and/or circulates in said apparatus. In examples not encompassed by the wording of the claims, the fluid may be a liquid, for example water. The apparatus 1 is of the type generally used as a meter or meter for the flow of gas which passes through the section of a pipe on which said apparatus is installed.

Conveniently, the apparatus 1 is provided with a fluid 30 inlet 3, for example connected to a pipe section upstream of the device, and a fluid outlet 5, for example connected to a pipe section downstream of said apparatus.

Conveniently, the apparatus 1 is provided with a containment casing 7 in which are defined:
- an inlet opening 3 to allow the fluid 30 to enter inside said enclosure, and
- an outlet opening 5 to allow the fluid 30, which has entered/circulated in said casing 7, to escape from the latter.

Preferably, the containment casing 7 is watertight to prevent the fluid from escaping to the outside. Preferably, the containment envelope 7 is formed by two or more parts joined together in such a way as to ensure the tightness of the entire envelope. Preferably, the containment casing 7 is made of metal, in particular of metal sheet.

Preferably, an interception valve (not shown) for the fluid flowing through the apparatus and directed towards the outlet 5 can be housed inside the casing 7.

The apparatus 1 comprises a measuring device 2 which is housed inside the containment casing 7. Conveniently, the measuring device 2 comprises at least one sensor, preferably a plurality of sensors which are configured to detect corresponding quantities of the fluid entering and passing through said apparatus 1.

Preferably, the measuring device 2 can comprise sensors configured to measure a plurality of properties and/or characteristic values relating to the flow of gas that passes through the apparatus 1. Alternatively, in examples not encompassed by the wording of the claims, the measuring device 2 can comprise sensors for measuring a plurality of properties and/or characteristic values relating to a stream of water or other liquid passing through the apparatus itself.

For example, the sensors can be configured to measure the amount of fluid 30 flowing through the apparatus 1 in a given period of time. Furthermore, the sensors can be configured to measure other properties of the fluid, such as pressure, velocity, composition and/or degree of impurities present, temperature, etc. Furthermore, in the case of a measuring device 2 for gas, the sensors can be configured to also measure the higher and/or lower calorific value and/or other properties and/or characteristic values of the gas. Conveniently, the measuring device 2 can comprise a flow sensor of the membrane type which comprises a traditional mechanical system (for example comprising a crank mechanism connected to a pin) which is associated with a detection and conversion system (encoder and optical sensors) in electronic pulses; in particular, the mechanical system alone or both of said systems can be provided inside the enclosure 7 and, furthermore, suitably, the detection and conversion system can be connected to a corresponding calculation and management electronics which is provided outside the casing 7.

Conveniently, the measuring device 2 can comprise at least one flow sensor of the ultrasonic or thermo-mass type.

Conveniently, the sensors of the measuring device 2 can be connected to a first processing unit which is configured to receive and process the readings (measurements) made and coming from said sensors. Advantageously, the measuring device 2 of the apparatus 1 can comprise a first processing unit (not shown) which, preferably, is housed inside the casing 7. Preferably, said first processing unit is implemented by a corresponding processor. Conveniently, said first processing unit is defined by an electronic board equipped with a microprocessor or microcontroller which is provided inside the casing 7. Advantageously, the first processing unit can be configured to also act as a control unit and command, and preferably also for storage, for said apparatus 1.

In particular, said first processing unit can be housed inside the casing 7 of the apparatus 1 or, according to an embodiment not shown, can be associated externally to the wall of said casing 7.

The apparatus 1 comprises an external device 20 which is positioned externally to the casing 7. Conveniently, the external device 20 is housed inside a second casing, preferably made of plastic. Preferably, said external device 20 is associated with the external surface of a wall of said casing, however it could also be mechanically disconnected from the casing 7, even though it is electronically connected (in particular by means of an electrical signal transmission cable) with the measuring device 2 and/or the processing unit housed inside the casing 7.

Conveniently, the external device 20 comprises a further processing and/or control unit - hereinafter external electronic unit 25 - which, preferably, is defined by a electronic board (e.g. printed circuit PCB) in which a microprocessor or microcontroller is housed. In particular, the external electronic unit 25 can be configured to receive the readings made by said sensor/s of the measuring device 2 and, in particular, to receive electrical signals (preferably digital) representative of the quantities detected by said/the sensor/s of the measuring device 2.

Conveniently, the measuring device 2, housed inside the casing 7, and the external device 20, provided outside the casing 7, are connected by means of electrical connection, for example by means of a cable 24 for the transmission of electrical signals, preferably a flat cable of the "FFC" type ("Flexible flat cable"). Conveniently, said cable can also be configured to transmit the electric power supply to the internal processing unit and/or to the sensors of the measuring device 2.

Conveniently, the electric cable 24 can pass from the inside to the outside of said casing. 7 in correspondence of the contact areas provided between the flanges of two half-shells defining said casing (as provided for example in EP2810024 or in EP300256) and/or in correspondence with an opening passage, suitably sealed, defined in a wall or in correspondence with said flanges. In particular, the external electronic unit 25 of the external device 20 can be connected to the sensor(s) of the measuring device 2 and/or, if provided, to the electronic unit of said measuring device 2.

The device 1 comprises at least two communication modules 8 and 10 configured to transmit and/or receive data via wireless connections. In particular, each communication module 8 and 10 comprises transceiver means of the wireless type, in particular via radio.

Conveniently, said two communication modules 8 and 10 are configured for transmitting and/or receiving data on frequencies or frequency bands which are different between the two modules.

Advantageously, said two communication modules 8 and 10 are configured for transmitting and/or receiving data with different communication protocols and/or standards.

Advantageously, said two communication modules 8 and 10 are configured for transmitting and/or receiving data with different communication technologies.

The communication modules 8 and 10 are housed outside the casing 7. Alternatively, in examples not encompassed by the wording of the claims, one or both of the communication modules 8 and 10 could also be housed inside the casing 7.

The communication modules 8 and 10 are housed inside the external device 20. Advantageously, said two communication modules 8 and 10 can be connected and/or integrated in the electronic circuit of the processing unit 25 of the external device 20.

Conveniently, in examples not encompassed by the wording of the claims, the communication modules 8 and 10 could be housed inside a further external device (not shown) which is mechanically separated from the casing 7 and from the external device 20 of the apparatus 1, while being electronically connected with said external device 20 and/or with a control unit provided for the command and/or management of said communication modules.

Preferably, the communication modules 8 and 10 are configured to allow the device 1 to interact and exchange data and/or information and/or commands with an external portable device 21, such as for example a smartphone or tablet, which can communicate with an external unit 22. Preferably, said external portable device 21 is a device which is configured to perform a drive-by or walk-by reading (i.e. data acquisition) operation.

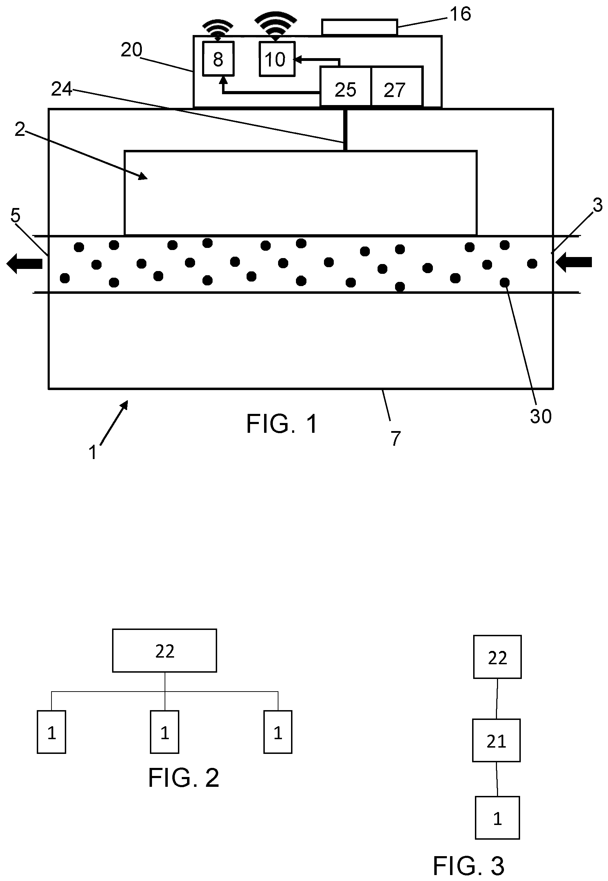

Advantageously, the communication modules 8 and 10 can be configured to allow the apparatus 1 to interact and exchange data and/or information and/or commands with a unit 22 which is external to the apparatus 1. Preferably, the external unit 22 can be a processing unit. Conveniently, the external unit 22 can be defined by an external central unit - preferably remotely - which is configured to receive information from one or more apparatuses 1 (see fig. 2). Preferably, the external unit 22 defines a central data processing system (called "SAC").

Conveniently, the external unit 22 can be located near the apparatus 1 or at a considerable distance (i.e. remotely).

Conveniently, the first communication module 8 is configured to transmit and/or receive data at a first frequency or in a first frequency band. Preferably the first device 8 is configured to transmit and/or receive data at frequencies or bands (ranges) of "licensed" or "proprietary" frequencies (for example according to the GSM, GPRS, LTE, NB-IoT standards, etc.), that is, which are controlled by an authority - for example by the governmental authority of a country or group of countries - and which can be used (i.e. the transmission or re-transmission of data on that given frequency or frequency band is allowed) only if a corresponding authorization (license) has been granted and/or a corresponding contribution has been paid. Conveniently, it is understood that the "licensed" or "proprietary" frequencies may differ from country to country, based on the regulations in force.

The second communication module 10 is configured to transmit and/or receive data at a second frequency or in a second frequency band. Conveniently, the second frequency or frequency band is separate and distinct from the first frequency or frequency band used by the first communication module 8. Conveniently, the second communication module 10 is configured to transmit and/or receive data at frequencies or bands (ranges) of "unlicensed" or "free" frequencies (such as those used in Wmbus, LoRa technologies, etc.), for the use of which, that is, no authorization or license is required and/or payment of any contribution is not required. For example, these frequencies may include the so-called "5 GHz" range, which includes the frequency range between 5.1 and 5.7 GHz, or the range known as "2.4 GHz", which includes the frequency range between 2.4 and 2.492 GHz, or the range known as "sub-giga Hz" (or the "Industrial-Scientific and Medical" or "ISM" band) which includes the frequency range between approximately 400 and 900 MHz.

Preferably, the first communication module 8 is configured to operate with the LPWAN radio technology and standard NB-IoT (multiband), while the second communication module 10 is configured to operate with the LoRa technology.

Advantageously, the apparatus 1 comprises - housed inside the external device 20 - at least one source of electrical energy 27 for the components of the external device itself (i.e. both for the external electronic unit 25 and/or for the communication modules 8 and 10) and for the components of the measuring device 2 (in particular for the sensor(s)). Preferably, said at least source of electrical energy 27 comprises at least one storage unit (battery or cell); suitably, said storage unit is connected directly or by means of the electronic board of the external electronic unit 25 to the various components in order to supply the electrical energy for their operation.

Advantageously, the external device 20 also comprises a user interface 16 - for example a push-button panel associated with a display or a touch-screen display - configured to allow the user to interact with the external electronic unit 25 of said external device 20 and/or with the measuring device 2. Preferably, the data received and/or processed by said external electronic unit 25 are shown on the display.

The apparatus 1 also comprises a control unit of said two communication modules 8 and 10.

Preferably, said control unit of the two communication modules 8 and 10 can be defined by the same external electronic processing unit 25 and/or processor of the external device 20, however it could also be defined by an electronic processing unit and/or by a processor housed inside the casing 7, such as that of the measuring device 2, or it could be defined by a unit processing electronics and/or by a separate and dedicated processor. Conveniently, said control unit of the two communication modules 8, preferably powered by its own energy source, can be housed in a suitable external container which is mechanically separated from the casing 7 and from the external device 20, while being electronically connected with the measuring device 2 present inside said casing 7 and/or with said external device 20.

Conveniently, said control unit of the two communication modules 8 and 10 is electronically connected and/or integrated in said at least two wireless communication modules 8 and 10.

Preferably, the control unit of the two communication modules 8 and 10 comprises a microcontroller which is connected to the communication modules 8 and 10 by means of corresponding interfaces.

Conveniently, the control unit is configured to manage the two communication modules 8 and 10, and in particular to control and command the use and/or activation/deactivation (for data transmission or trans-transmission to the outside of the apparatus 1) of only one at a time of said at least two wireless communication modules 8 and 10 for data transmission towards the outside of said apparatus 1 and/or for receiving data from the outside of said apparatus 1, and also for control and command the passage from the use of one module to the use of the other module for data transmission to the outside of said device 1 and/or for receiving data from the outside of said device 1.

In particular, when one of the two communication modules 8 and 10 is activated, it is possible to transmit and/or receive data at the operating frequencies or frequency bands of that particular module; on the contrary, when one of the two communication modules 8 and 10 is deactivated, the transmission and/or reception of data at the operating frequencies or frequency bands of that particular module is not possible.

More in detail, for this purpose, the control unit can be configured to conveniently control the power supply of the two communication modules 8 and 10 and/or to enable their operation/operational connection (while both remain always electrically powered) . Conveniently, in a further variant, both communication modules 8 and 10 could always be powered and activated, but the control unit can be configured to receive and/or use only the data transmitted/received to/from one of the two modules.

Conveniently, while one of the two communication modules 8 and 10 is activated and used/operational, the other module can be deactivated or be in an inoperative "sleep" or "stand-by" mode.

Conveniently, the configuration of the control unit for managing the two communication modules 8 and 10 is defined by a corresponding software program - preferably firmware - executed by/in the processor of said control unit.

Conveniently, the configuration of the control unit 4 can be performed locally by loading a software into the processor of said unit. Preferably, the control unit 4 is programmed so that its configuration for the use and/or management of the two communication modules 8 and 10 is carried out remotely by sending a corresponding data packet through one of said communication modules 8 or 10.

Conveniently, the control unit can be configured to alternately command the activation/deactivation and/or use of each two communication modules 8 and 10. In particular, when a communication module 8 or 10 is activated and/or used, the other communication module 10 or 8 is deactivated and/or not used.

Conveniently, the control unit can be configured to synchronously control the activation/deactivation and/or use of each of the two communication modules 8 and 10.

Conveniently, the control unit can be configured to control independently the activation/deactivation and/or use of the two communication modules 8 and 10.

Conveniently, the control unit can be configured to also command the simultaneous activation and/or use of the communication modules 8 and 10.

Advantageously, the control unit is configured to control the passage from one communication module 8, 10 to the other communication module 10, 8 automatically or in response to a signal sent remotely or locally by an operator acting on the user interface 16 of the apparatus itself.

Advantageously, the control unit is configured to command the activation and/or use of one of said two modules 8 and 10 - and preferably the deactivation of the other module - following the reception of a predefined or preset signal, which preferably it can be set remotely before and/or during use of the apparatus. Preferably, said predefined signal is sent from the outside via wireless. Preferably, said predefined signal can be sent by an external device configured to read the information detected by the device 1.

Advantageously, the control unit is configured to command the activation and/or use of one of said two modules 8 and 10 - and preferably the deactivation of the other module - following the receipt of an input command generated by acting on the user interface 16 of the apparatus itself.

Preferably, the control unit is configured to automatically control the use of only one of said two modules 8 and 10 and the passage from the use of one module to the use of the other module on the basis of the received or non-received signals. for a certain time interval, from the outside and/or following the switch commands received from the outside, and/or following configuration signals appropriately received from the outside in order to define the times and/or methods in which used or activated one module or the other.

Advantageously, the control unit is configured to automatically control the activation and/or use of one of said two modules 8 and 10 after a predefined time interval which, preferably, can be fixed or settable. Preferably, the control unit is configured to command the activation and/or use of one of said two modules 8 and 10 after the other module has not received any data or has not received data readable and/or consistent and/or validly usable by the device from the outside for a certain time interval.

The control unit is configured to implement a strategy (S1) which includes:
- a first condition (i.e. operating state) in which only one of the two communication modules 8 and 10 is activated and/or used for transmission and/or reception, and
- a second condition (i.e. operating state) in which, simultaneously or in sequence, both communication modules 8 and 10, with which the apparatus 1 is provided, are activated and/or used for the transmission and/or reception of the same data.

Conveniently, said control unit is configured to pass into/use said second condition only to transmit and/or receive some data, preferably predefined data and set as high priority data.

Conveniently, said some data to be transmitted and/or received in said second condition may include measurement data and/or messages (i.e. a set of organized data) which are preset and/or remotely settable, or other types of data in general preset. and/or remotely settable.

Conveniently, said some data to be transmitted and/or received in said second condition are preset and/or are set remotely both before and during the use of the device.

Conveniently, for example, high priority data include alarm messages and/or data (information) relating to the measurement carried out and to be sent periodically. In particular, for example, for some users, in order to meet the provisions of the law, it may be envisaged that at a certain frequency (for example once a month) and/or in a certain time period (for example the last days of the month) the measuring apparatus passes into said second condition in order to send in this way with both communication modules 8 and 10 the data of the measurements carried out on the fluid, which passes through the apparatus itself. Advantageously, by sending the alarm messages through both communication modules 8 and 10, the probability of receiving the messages is increased, thus making the management of the alarm safer than traditional solutions in which the alarm is sent several times in sequence, close or delayed in time, but always and only with a single communication module, with the drawback that, if the communication channel of that module is not usable, the alarm message is either not received or is received late.

Conveniently, the configuration of the control unit to define:
- when to pass in said second condition, and/or
- what are said some data to be transmitted with both modules 8 and 10, and/or
- the content of said some data to be transmitted with both modules 8 and 10, can be set remotely before and/or during installation or operational use of the apparatus.

Advantageously, said some data to be transmitted with both modules 8 and 10 can be remotely configured/set in *run-time.*

In particular, preferably, said control unit is configured to operate by default (basic/generally) in said first condition and to pass into/use said second condition only to transmit and/or receive some data, preferably preset or settable data from remote, more preferably those with high priority (for example in the case of "alarms").

Appropriately, therefore, only some data - which are suitably defined/selected in advance - are sent and/or received through both modules 8 and 10.

Conveniently, this first type of control strategy S1 can be used when in the site where the 'device 1 both communication technologies are available (in particular in terms of "licensed" and "free" frequencies) used/implemented by said two communication modules 8 and 10, and advantageously, in this way, a greater probability is guaranteed successful for priority transmissions, for example for alarms.

In other words, according to this first strategy S1, only some data are sent and/or received with both communication modules 8 and 10, while in all other cases (i.e. for all other data to be sent and/or received) uses in sending and/or receiving only one of the two communication modules 8 or 10.

Conveniently, in said first condition (corresponding to the standard and default condition), only the first communication module 8 can always be activated and/or used or the second communication module 10 can always be activated and/or used alone (preferably according to the provisions of strategy S3 described below).

Suitably, in said first condition (corresponding to the standard and the default condition), can be activated and/or used in an alternative way - preferably in accordance with the strategies S2 and/or S4 described below - both of said modules 8 and 10.

Suitably, in said first condition, the same data are not sent with both modules 8 and 10, but only with one of these.

Conveniently, the control unit is configured to implement a second strategy S2, which envisages activating and/or using, in a basic and normal operating condition (default), one of said two communication modules 8 or 10 and to activate and/or use the other module 10 or 8 only when the one used in basic and normal operating conditions no longer allows any communication with the outside or does not allow correct communication with the outside.

Preferably, the control unit implements said second strategy S2 when it is found to operate in said first condition.

**In** particular, the control unit is configured so that the "switch" command to pass from one module to another can be sent remotely and/or set locally by a vending machine operator and/or automatically; in more detail, for example, the control unit can be configured to control the passage from one communication module 8 and 10 to the other (i.e. to deactivate and/or stop using a module, to activate and/or then use the other module) when the previous module no longer receives "useful" data/messages for a period of time which, preferably, can be set. Conveniently, a "useful" message means a syntactically correct message, with correct security credentials and whose data carried can be usefully used.

In particular, advantageously, the control unit 4 is configured to implement an automatic evaluation procedure ("check") of each message to be sent or received to establish whether the latter is a "useful" message or not, or whether it is a "priority" message or not. Conveniently, a "useful" or "priority" message may include preset data or information or commands that are generated when certain conditions are met.

Advantageously, this type of control strategy S2 can be used when both communication technologies are available in the site where the device 1 is installed (in particular in terms of frequencies respectively "licensed" and "free") used/implemented by said two communication modules 8 and 10. Conveniently, the communication technology used by one of said modules 8 and 10 is preferred for technical and/or economic reasons and, therefore, the corresponding module operates as a main and basic module (default), while the other communication technology used by the other module is used only in the case, even temporary, in which that of the main and basic module is no longer available or is available but with characteristics no longer suitable for correct communication.

Advantageously, according to a third strategy S3, the control unit is configured to always use only one of the two communication modules 8 and 10, which are in any case both present inside the device 1. Conveniently, this type of control strategy S3 can be used when in the site where device 1 is installed, only one of the communication technologies (in particular in terms of "licensed" and "free" frequencies) used/implemented by said two communication modules 8 and 10 is available.

Preferably, the control unit implements said second strategy S2 when it is found to operate in said first condition.

Advantageously, according to a fourth strategy S4, the control unit is configured to use, alternatively and preferably in sequence, both the communication modules 8 and 10 with which the apparatus 1 is provided. In particular, first a communication module is used and, subsequently, for the same data to be transmitted and/or received, the other communication module is used.

Conveniently, this type of control strategy S4 can be used when both communication technologies are available at the site where device 1 is installed (in particular in terms of "licensed" and "free" frequencies) used/implemented by said two communication modules 8 and 10. Appropriately, in this way, a redundancy of data transmission over time and space is obtained, thus ensuring greater availability both in terms of communication technologies and communicated data.

Preferably, the control unit implements said fourth strategy S4 when it is found to operate in said second condition.

Advantageously, according to a fifth strategy S5, the control unit is configured to use always and only the second communication module 10 (which uses "free/not licensed" frequencies) with a "walk-by" or "Drive-by"; the first communication module 8 which uses "licensed" frequencies - even though it is present inside device 1 - remains deactivated. Conveniently, this type of control strategy S5 can be used when in the site where the apparatus 1 is installed there is no fixed network capable of supporting one of the communication technologies used/implemented by said two communication modules 8 and 10.

Advantageously, according to a sixth strategy S6, the control unit is configured to use the second communication module 10 (which uses "free/not licensed" frequencies) with a "walk-by" or "drive- by "only when both communication modules 8 and 10 used for communication with the fixed infrastructures of the network are no longer available or can be used correctly. Preferably, when one of the two communication technologies based on the fixed infrastructures of the network and used/implemented by said two communication modules 8 and 10 becomes available and can be used correctly (for example it receives at least one useful message through one of said modules), the control unit 4 is configured to automatically return to using one of the strategies S1-S4 described above.

Preferably, the control unit implements said sixth strategy S6 if necessary in replacement of said first strategy S1.

Conveniently, this type of control strategy S6 can be used when at least one of the - preferably both - communication technologies is available at the site where device 1 is installed (in particular in terms of "licensed" and "free" frequencies) used/implemented by said two communication modules 8 and 10, but both technologies are unavailable or not correctly usable for a limited period of time.

Preferably, the control unit is configured/programmed or is configurable/programmable so as to be able to implement strategies S1 and S6 if necessary.

Advantageously, it is understood that the control unit can be configured/programmed to implement only one of said strategies S1-S6, or even more than one (in any combination) or, also, can implement all six of them. Conveniently, the control unit can implement two, three or more of said strategies S1-S6.

Conveniently, two or more of said strategies S1-S6 can be set and programmed in the control unit and, if necessary, the selection/choice of the most suitable strategy to be used can be carried out automatically and/or following receipt of a command sent remotely via at least one of said two communication modules 8 or 10, and/or following the receipt of a command set by an operator acting on the user interface 16 of the apparatus itself.

Conveniently, the configuration of the control unit - which can be carried out both locally and remotely by sending a corresponding data packet through one of the communication modules 8 or 10 - concerns the parameters that regulate the operation of the strategy itself, the limitations imposed on the strategy and use of the single communication technology used/implemented by the corresponding module, the parameters that regulate IT security in the use of each technology used/implemented by the corresponding module. Preferably, the configuration of the control unit to manage the use of said two communication modules 8 and 10 is carried out by sending a corresponding configuration data packet through one of said two communication modules 8 and 10.

Advantageously, the second communication module 10 (which uses "free/not licensed" frequencies) can be used as a direct communication channel towards a device (preferably portable) managed by the user/consumer of device 1. In particular, in this way, it is possible to communicate to the 'user - directly (i.e. without the intermediation of the external central unit 22), automatically and in real time - information relating to the consumption of gas/water and/or the status of his system, information that is currently available to the user only deferred and on specific request.

Conveniently, the second communication module 10 (which uses "free/unlicensed" frequencies) can be used to implement/support "walk-by" or "drive-by" communication modes, therefore without the need for fixed networks/infrastructures to transmit and collect the data transmitted by the device 1. In particular, an operator equipped with a suitable receiving device 21, passing near the device 1 on foot or on board a vehicle, is able to collect the data transmitted by device 1. In particular, this communication mode can be the only one used in the event that - at the site where device 1 is installed - there are no fixed network infrastructures capable of communicating with modules 8 and 10 with which the device itself is provided, or is the mode used as a last resort and/or fallback attempt when the communication modes with modules 8 and 10 based on network infrastructures fixed are no longer available or properly usable.

From the aforegoing it is clear that the device 1 according to the invention is particularly advantageous compared to traditional solutions because:
- it ensures that the communication technology used is always the most effective and efficient one,
- it's easy to use,
- it can allow a useful redundancy of data transmission, in particular priority data, thus maximizing the probability of data delivery;
- it can also support the direct communication of information to the user, it
- can support the "walk-by" or "drive-by" communication method, thus also allowing to manage contexts in which a fixed network infrastructure is not foreseen for communications .

In particular, unlike US2016/0076909, US2009/309755, EP3369452, WO2008/033514 and US2019/281371, in the solution according to the invention the control unit is configured so as to implement a control and/or control strategy (S1) o management of said two communication modules which includes:
- a first condition in which only one of the two communication modules (8, 10) is activated and/or used for transmission and/or reception, and therefore the data is sent with or received by only one of said two communication modules (8, 10)
- a second condition in which, simultaneously or in sequence, both the communication modules (8, 10) with which the device 1 is provided are activated and/or used for the transmission and/or reception of the same data.
   and in which said control unit is configured to pass into and use said second condition only to send and/or receive some data, preferably high priority data which are suitably predefined and/or set remotely.

The solution according to the present invention is particularly advantageous since, when the control unit is in the first condition, which is the basic/default condition and in which only one of the two communication modules is activated, it is optimized (i.e. appropriately minimized) the use of the device resources provided for processing, transmission and/or power supply, while the activation (more expensive in terms of resources) of the two modules for transmission and/or reception of the same data is foreseen only for some data, thus ensuring a greater probability of success for priority transmissions/receptions, for example for alarms or some measurement data to be transmitted at a certain frequency and/or in a certain time period.

## Claims

1. Apparatus (1) for measuring one or more properties of a gas (30), of the meter type suitable for measuring the flow of gas (30) which passes through and/or circulates in said apparatus (1) , comprising:
- a containment casing (7) provided with an opening for the inlet (3) of the gas inside it and an opening for the outlet (5) of the gas,
- a measuring device (2) which is housed inside said casing (7) and which comprises at least one sensor for detecting a corresponding property of the flow of gas (30) that passes through and/or circulates in said apparatus (1),
- at least two wireless communication modules (8, 10) which are configured for transmitting and/or receiving data on frequencies or frequency bands that are different between said two modules,
- a control unit which is electronically connected and/or integrated in said at least two wireless communication modules (8, 10) and which is configured to command the use of said at least two wireless communication modules (8, 10) for data transmission to the outside of said device (1) and/or to receive data from the outside of said device (1) and also to control the passage from the use of a module (8, 10) to the use of another module (10, 8) for transmitting data to the outside of said device (1) and/or for receiving data from the outside of said device (1),
wherein the control unit is configured in order to implement a control and/or management strategy (S1) of said two communication modules (8, 10) which includes:
- a first condition in which only one of the two communication modules (8, 10) is activated and/or used for transmission and/or reception, thus the data being transmitted and/or received by only one of said two communication modules (8, 10),
- a second condition in which, simultaneously or in sequence, both communication modules (8, 10), with which the device (1) is equipped, are activated and/or used for the transmission and/or reception of the same data,
and said control unit is configured to operate in said second condition only to send and/or receive some data, preferably predefined data and set as high priority data,
and wherein:
- the apparatus (1) comprises an external device (20) which is positioned externally to the casing (7),
- said two communication modules (8, 10) are housed outside the casing (7) and inside the external device (20),
- the measuring device (2), housed inside the casing (7), and the external device (20), provided outside the casing (7), are connected by means of electrical connection,
- the apparatus (1) comprises, inside the external device (20), at least one source of electrical energy (27) for the components of the external device (20) and for the components of the measuring device (2).

2. Apparatus according to claim 1, **characterized in that**:
- said first communication module (8) is configured to transmit and/or receive data at a first frequency, or frequency band, which is licensed,
- said second communication module (10) is configured to transmit and/or receive data at a second frequency, or frequency band, which is free and not licensed.

3. Apparatus according to one or more of the preceding claims, **characterized in that** said two communication modules (8, 10) are configured for the transmission and/or reception of data with protocols/standards and/or communication technologies which are different from each other.

4. Apparatus according to one or more of the preceding claims, **characterized in that** the external device (20) is associated externally to said containment casing (7) and comprises an electronic processing unit (25) which is also configured to receive the readings made by said at least one sensor of the measuring device (2).

5. Apparatus according to one or more of the preceding claims, **characterized in that** the control unit is configured to command the activation and/or use of one of said communication modules (8, 10) in the face of a signal sent by remote control and/or a local command sent via a user interface (16) with which the apparatus itself is equipped.

6. Apparatus according to one or more of the preceding claims, **characterized in that**, in said first condition, the control unit is configured to automatically control the activation and/or use of one of said two modules (8, 10) after that, for a predefined time interval, preferably settable, the other module has not received any data or has not received readable and/or consistent data from the outside.

7. Apparatus according to one or more of the preceding claims, **characterized in that**, in said first condition, the control unit is configured to activate and/or use alternately and in sequence always both communication modules (8, 10) with which the apparatus (1) is provided.

8. Apparatus according to one or more of the preceding claims, **characterized in that** the control unit is configured to use said second communication module (10), which uses a second frequency or frequency band which is free and not licensed, with a "walk-by" or "drive-by" type of communication mode.

9. Apparatus according to one or more of the preceding claims, **characterized in that** the control unit is also configured to implement a second strategy (S2) which provides for activating and/or using the other module (10, 8) only when that previously used (8, 10) no longer allows any communication with the outside or does not allow correct communication with the outside.

10. Apparatus according to one or more of the preceding claims, **characterized in that** the control unit is also configured to implement a fourth strategy (S4) which provides for using in said second condition, alternatively and in sequence, always both communication modules (8, 10) to transmit and/or receive the same data.

11. Apparatus according to one or more of the preceding claims, **characterized in that** the control unit is also configured to implement a fifth strategy (S5) which provides for using said second communication module (10), which uses a second frequency or frequency band that is free and not licensed, always and only (S5) with a "walk-by" or "drive-by" type of communication.

12. Apparatus according to one or more of the preceding claims, **characterized in that** the control unit is also configured to implement a sixth strategy (S6) which provides for using said second communication module (10), which uses a second frequency or frequency band that is free and unlicensed, with a "walk-by" or "drive-by" communication mode only (S6) when both of these communication modules (8, 10) for communication with fixed infrastructures network are no longer available or properly usable.

13. Apparatus according to one or more of the preceding claims, **characterized in that** the control unit (4) is programmed so that the configuration of the strategy (S1, S2, S4, S5 and S6) for use and/or the management of said at least two communication modules (8, 10) is carried out remotely by sending a corresponding data packet through one of said two communication modules (8, 10).

14. Apparatus according to one or more of the preceding claims, **characterized in that** the control unit (4) is configured to implement at least two of said strategies (S1, S2, S4, S5 and S6) and in such a way that the selection of the strategy to be used is carried out automatically and/or following the receipt of a command sent remotely via at least one of said two communication modules (8, 10) and/or following the receipt of a command set by an operator acting on a user interface (16) with which the apparatus itself is equipped.

15. Apparatus according to one or more of the preceding claims, **characterized in that**:
- the control unit (4) is programmed so that its configuration for the use and/or management of the two communication modules (8, 10) is carried out remotely by sending a corresponding data packet through one of said communication modules (8, 10), and
- said configuration of the control unit to be set remotely defines
- when to pass in said second condition, and/or
- which are said data to be transmitted with both modules (8, 10), and/or
- the content of said some data to be transmitted with both modules (8, 10).

## Patentansprüche

1. Vorrichtung (1) vom Zählertyp zur Messung von einer oder mehreren Eigenschaften eines Gases (30), die zur Messung des Gasdurchflusses (30) geeignet ist, der durch die Vorrichtung (1) strömt und/oder darin zirkuliert, umfassend:
- ein Fassungsgehäuse (7), das mit einer Öffnung für den Einlass (3) des Gases in sein Inneres und einer Öffnung für den Auslass (5) des Gases versehen ist;
- ein Messgerät (2), das innerhalb des Gehäuses (7) untergebracht ist und das mindestens einen Sensor zum Erfassen einer entsprechenden Eigenschaft des Gasdurchflusses (30), der durch die Vorrichtung (1) strömt und/oder darin zirkuliert, umfasst;
- mindestens zwei drahtlose Kommunikationsmodule (8, 10), die ausgelegt sind, um Daten auf Frequenzen oder in Frequenzbändern, die zwischen den beiden Modulen unterschiedlich sind, zu übertragen und/oder zu empfangen;
- eine Steuereinheit, die elektronisch mit den mindestens zwei drahtlosen Kommunikationsmodulen (8, 10) verbunden und/oder darin integriert ist und die ausgelegt ist, um die Verwendung der mindestens zwei drahtlosen Kommunikationsmodule (8, 10) für die Datenübertragung zur Außenseite der Vorrichtung (1) zu befehlen und/oder Daten von der Außenseite der Vorrichtung (1) zu empfangen und auch den Übergang von der Verwendung eines Moduls (8, 10) zur Verwendung eines anderen Moduls (10, 8) zum Übertragen von Daten zur Außenseite der Vorrichtung (1) und/oder zum Empfangen von Daten von der Außenseite der Vorrichtung (1) zu steuern,
wobei die Steuereinheit ausgelegt ist, um eine Steuer- und/oder Verwaltungsstrategie (S1) der beiden Kommunikationsmodule (8, 10) umzusetzen, die Folgendes beinhaltet:
- einen ersten Zustand, in dem nur eines der beiden Kommunikationsmodule (8, 10) aktiviert ist und/oder zur Übertragung und/oder zum Empfang verwendet wird, sodass die Daten von nur einem der beiden Kommunikationsmodule (8, 10) übertragen und/oder empfangen werden;
- einen zweiten Zustand, in dem gleichzeitig oder nacheinander beide Kommunikationsmodule (8, 10), mit denen die Vorrichtung (1) ausgestattet ist, aktiviert sind und/oder zur Übertragung und/oder zum Empfang derselben Daten verwendet werden,
und wobei die Steuereinheit ausgelegt ist, um im zweiten Zustand nur einige Daten, vorzugsweise vordefinierte Daten, die als Daten mit hoher Priorität festgelegt sind, zu übertragen und/oder zu empfangen,
und wobei
- die Vorrichtung (1) ein externes Gerät (20) umfasst, das außerhalb des Gehäuses (7) angeordnet ist;
- die beiden Kommunikationsmodule (8, 10) außerhalb des Gehäuses (7) und innerhalb des externen Geräts (20) untergebracht sind;
- das innerhalb des Gehäuses (7) untergebrachte Messgerät (2) und das außerhalb des Gehäuses (7) vorgesehene externe Gerät (20) mittels einer elektrischen Verbindung miteinander verbunden sind;
- die Vorrichtung (1) innerhalb des externen Geräts (20) mindestens eine Stromquelle (27) für die Komponenten des externen Geräts (20) und für die Komponenten des Messgeräts (2) umfasst.

2. Vorrichtung nach Anspruch 1, **dadurch gekennzeichnet, dass**:
- das erste Kommunikationsmodul (8) ausgelegt ist, um Daten auf einer ersten lizenzierten Frequenz oder in einem ersten lizenzierten Frequenzband zu übertragen und/oder zu empfangen;
- das zweite Kommunikationsmodul (10) ausgelegt ist, um Daten auf einer zweiten freien und nicht lizenzierten Frequenz oder in einem zweiten und nicht lizenzierten Frequenzband zu übertragen und/oder zu empfangen.

3. Vorrichtung nach einem oder mehreren der vorhergehenden Ansprüche, **dadurch gekennzeichnet, dass** die beiden Kommunikationsmodule (8, 10) für die Übertragung und/oder den Empfang von Daten mit Protokollen/Standards und/oder Kommunikationstechnologien, die voneinander verschieden sind, ausgelegt sind.

4. Vorrichtung nach einem oder mehreren der vorhergehenden Ansprüche, **dadurch gekennzeichnet, dass** das externe Gerät (20) extern mit dem Fassungsgehäuse (7) assoziiert ist und eine elektronische Verarbeitungseinheit (25) umfasst, die ebenfalls ausgelegt ist, um die von dem mindestens einen Sensor des Messgeräts (2) erfassten Messwerte zu empfangen.

5. Vorrichtung nach einem oder mehreren der vorhergehenden Ansprüche, **dadurch gekennzeichnet, dass** die Steuereinheit ausgelegt ist, um die Aktivierung und/oder Verwendung von einem der Kommunikationsmodule (8, 10) angesichts eines per Fernsteuerung und/oder durch einen über eine Benutzerschnittstelle (16), mit der die Vorrichtung ausgestattet ist, gesendeten lokalen Befehl gesendeten Signals zu befehlen.

6. Vorrichtung nach einem oder mehreren der vorhergehenden Ansprüche, **dadurch gekennzeichnet, dass** die Steuereinheit in dem ersten Zustand ausgelegt ist, um die Aktivierung und/oder Verwendung von einem der beiden Module (8, 10) automatisch zu steuern, nachdem das andere Modul für ein vordefiniertes Zeitintervall, das vorzugsweise einstellbar ist, von der Außenseite keine Daten empfangen hat oder keine lesbaren und/oder konsistenten Daten empfangen hat.

7. Vorrichtung nach einem oder mehreren der vorhergehenden Ansprüche, **dadurch gekennzeichnet, dass** die Steuereinheit im ersten Zustand ausgelegt ist, um stets beide Kommunikationsmodule (8, 10), mit denen die Vorrichtung (1) versehen ist, zu aktivieren und/oder abwechselnd und nacheinander zu verwenden.

8. Vorrichtung nach einem oder mehreren der vorhergehenden Ansprüche, **dadurch gekennzeichnet, dass** die Steuereinheit ausgelegt ist, um das zweite Kommunikationsmodul (10) zu verwenden, das eine zweite freie und nicht lizenzierte Frequenz oder ein zweites freies und nicht lizenziertes Frequenzband mit einem Kommunikationsmodus vom "Walk-by"- oder "Drive-by"-Typ verwendet.

9. Vorrichtung nach einem oder mehreren der vorhergehenden Ansprüche, **dadurch gekennzeichnet, dass** die Steuereinheit auch ausgelegt ist, um eine zweite Strategie (S2) umzusetzen, die das Aktivieren und/oder Verwenden des anderen Moduls (10, 8) nur dann vorsieht, wenn das zuvor verwendete Modul (8, 10) keine Kommunikation mit der Außenseite mehr zulässt oder keine korrekte Kommunikation mit der Außenseite zulässt.

10. Vorrichtung nach einem oder mehreren der vorhergehenden Ansprüche, **dadurch gekennzeichnet, dass** die Steuereinheit auch ausgelegt ist, um eine vierte Strategie (S4) umzusetzen, die das Verwenden von stets beiden Kommunikationsmodulen (8, 10) abwechselnd und nacheinander im zweiten Zustand vorsieht, um dieselben Daten zu übertragen und/oder zu empfangen.

11. Vorrichtung nach einem oder mehreren der vorhergehenden Ansprüche, **dadurch gekennzeichnet, dass** die Steuereinheit auch ausgelegt ist, um eine fünfte Strategie (S5) umzusetzen, die das Verwenden des zweiten Kommunikationsmoduls (10) vorsieht, das eine zweite freie und nicht lizenzierte Frequenz oder ein zweites freies und nicht lizenziertes Frequenzband stets und ausschließlich (S5) mit einer Kommunikation vom "Walk-by"- oder "Drive-by"-Typ verwendet.

12. Vorrichtung nach einem oder mehreren der vorhergehenden Ansprüche, **dadurch gekennzeichnet, dass** die Steuereinheit auch ausgelegt ist, um eine sechste Strategie (S6) umzusetzen, die das Verwenden des zweiten Kommunikationsmoduls (10) vorsieht, das eine zweite freie und nicht lizenzierte Frequenz oder ein zweites freies und nicht lizenziertes Frequenzband mit einem "Walk-by"- oder "Drive-by"-Kommunikationsmodus nur (S6) dann verwendet, wenn beide Kommunikationsmodule (8, 10) für die Kommunikation mit einem Netzwerk für feste Infrastrukturen nicht mehr verfügbar oder nicht mehr ordnungsgemäß verwendbar sind.

13. Vorrichtung nach einem oder mehreren der vorhergehenden Ansprüche, **dadurch gekennzeichnet, dass** die Steuereinheit (4) so programmiert ist, dass die Konfiguration der Strategie (S1, S2, S4, S5 und S6) zur Verwendung oder Verwaltung der mindestens zwei Kommunikationsmodule (8, 10) im Fernmodus durchgeführt wird, indem ein entsprechendes Datenpaket durch eines der beiden Kommunikationsmodule (8, 10) gesendet wird.

14. Vorrichtung nach einem oder mehreren der vorhergehenden Ansprüche, **dadurch gekennzeichnet, dass** die Steuereinheit (4) ausgelegt ist, um mindestens zwei der Strategien (S1, S2, S4, S5 und S6) umzusetzen, und zwar so, dass die Auswahl der zu verwendenden Strategie automatisch und/oder nach dem Empfang eines im Fernmodus über mindestens eines der beiden Kommunikationsmodule (8, 10) gesendeten Befehls und/oder nach dem Empfang eines von einem auf eine Benutzerschnittstelle (16), mit der die Vorrichtung ausgestattet ist, einwirkenden Bedieners eingestellten Befehls erfolgt.

15. Vorrichtung nach einem oder mehreren der vorhergehenden Ansprüche, **dadurch gekennzeichnet, dass**:
- die Steuereinheit (4) so programmiert ist, dass ihre Konfiguration zur Verwendung und/oder Verwaltung der beiden Kommunikationsmodule (8, 10) im Fernmodus durchgeführt wird, indem ein entsprechendes Datenpaket durch eines der Kommunikationsmodule (8, 10) gesendet wird, und
- die im Fernmodus einzustellende Konfiguration der Steuereinheit Folgendes definiert:
- wann der Übergang in den zweiten Zustand erfolgen soll und/oder
- welches die Daten sind, die mit beiden Modulen (8, 10) zu übertragen sind, und/oder
- den Inhalt der mit beiden Modulen (8, 10) zu übertragenden einigen Daten.

## Revendications

1. Appareil (1) de mesure d'une ou plusieurs propriétés d'un gaz (30), du type compteur apte à mesurer le débit de gaz (30) qui passe et/ou circule dans ledit appareil (1), comprenant :
- une enveloppe de confinement (7) pourvue d'une ouverture pour l'entrée (3) du gaz à l'intérieur de celle-ci et d'une ouverture pour la sortie (5) du gaz,
- un dispositif de mesure (2) étant logé à l'intérieur de ladite enveloppe (7) et comprenant au moins un capteur pour détecter une propriété correspondante du débit de gaz (30) qui passe et/ou circule dans ledit appareil (1),
- au moins deux modules de communication sans fil (8, 10) étant configurés pour transmettre et/ou recevoir des données sur des fréquences ou des bandes de fréquences étant différentes entre lesdits deux modules,
- une unité de commande qui est électroniquement reliée et/ou intégrée dans lesdits au moins deux modules de communication sans fil (8, 10) et qui est configurée pour commander l'utilisation desdits au moins deux modules de communication sans fil (8, 10) pour la transmission de données vers l'extérieur dudit dispositif (1) et/ou pour recevoir des données de l'extérieur dudit dispositif (1) et également pour commander le passage de l'utilisation d'un module (8, 10) à l'utilisation d'un autre module (10, 8) pour la transmission de données vers l'extérieur dudit dispositif (1) et/ou pour la réception de données de l'extérieur dudit dispositif (1),
l'unité de commande étant configurée pour mettre en œuvre une stratégie de commande et/ou de gestion (S1) desdits deux modules de communication (8, 10) qui comprend :
- une première condition dans laquelle un seul des deux modules de communication (8, 10) est activé et/ou utilisé pour la transmission et/ou la réception, les données étant donc transmises et/ou reçues par un seul desdits deux modules de communication (8, 10),
- une seconde condition dans laquelle, simultanément ou en séquence, les deux modules de communication (8, 10), dont le dispositif (1) est équipé, sont activés et/ou utilisés pour la transmission et/ou la réception des mêmes données,
et ladite unité de commande est configurée pour fonctionner dans ladite seconde condition uniquement pour envoyer et/ou recevoir certaines données, de préférence des données prédéfinies et définies comme des données hautement prioritaires,
et dans lequel :
- l'appareil (1) comprend un dispositif externe (20) qui est positionné à l'extérieur de l'enveloppe (7),
- lesdits deux modules de communication (8, 10) sont logés à l'extérieur de l'enveloppe (7) et à l'intérieur du dispositif externe (20),
- le dispositif de mesure (2), logé à l'intérieur de l'enveloppe (7), et le dispositif externe (20), prévu à l'extérieur de l'enveloppe (7), sont reliés au moyen d'une connexion électrique,
- l'appareil (1) comprend, à l'intérieur du dispositif externe (20), au moins une source d'énergie électrique (27) pour les composants du dispositif externe (20) et pour les composants du dispositif de mesure (2).

2. Appareil selon la revendication 1, **caractérisé en ce que** :
- ledit premier module de communication (8) est configuré pour transmettre et/ou recevoir des données à une première fréquence, ou bande de fréquences, qui est sous licence,
- ledit second module de communication (10) est configuré pour transmettre et/ou recevoir des données à une seconde fréquence, ou bande de fréquences, qui est libre et n'étant pas sous licence.

3. Appareil selon l'une ou plusieurs des revendications précédentes, **caractérisé en ce que** lesdits deux modules de communication (8, 10) sont configurés pour la transmission et/ou la réception de données avec des protocoles/standards et/ou technologies de communication différents les uns des autres.

4. Appareil selon l'une ou plusieurs des revendications précédentes, **caractérisé en ce que** le dispositif externe (20) est associé extérieurement à ladite enveloppe de confinement (7) et comprend une unité de traitement électronique (25) qui est également configurée pour recevoir les lectures effectuées par ledit au moins un capteur du dispositif de mesure (2).

5. Appareil selon l'une ou plusieurs des revendications précédentes, **caractérisé en ce que** l'unité de commande est configurée pour commander l'activation et/ou l'utilisation de l'un desdits modules de communication (8, 10) face à un signal envoyé par télécommande et/ou une commande locale envoyée via une interface utilisateur (16) dont l'appareil lui-même est équipé.

6. Appareil selon l'une ou plusieurs des revendications précédentes, **caractérisé en ce que**, dans ladite première condition, l'unité de commande est configurée pour commander automatiquement l'activation et/ou l'utilisation d'un desdits deux modules (8, 10) après que, pendant un intervalle de temps prédéfini, de préférence réglable, l'autre module n'a pas reçu de données ou n'a pas reçu de données lisibles et/ou cohérentes de l'extérieur.

7. Appareil selon l'une ou plusieurs des revendications précédentes, **caractérisé en ce que**, dans ladite première condition, l'unité de commande est configurée pour activer et/ou utiliser alternativement et en séquence toujours les deux modules de communication (8, 10) dont l'appareil (1) est pourvu.

8. Appareil selon l'une ou plusieurs des revendications précédentes, **caractérisé en ce que** l'unité de commande est configurée pour utiliser ledit second module de communication (10), qui utilise une seconde fréquence ou bande de fréquences libre et n'étant pas sous licence, avec un mode de communication de type « walk-by » ou « drive-by ».

9. Appareil selon l'une ou plusieurs des revendications précédentes, **caractérisé en ce que** l'unité de commande est également configurée pour mettre en œuvre une deuxième stratégie (S2) qui prévoit d'activer et/ou d'utiliser l'autre module (10, 8) uniquement lorsque celui précédemment utilisé (8, 10) ne permet plus aucune communication avec l'extérieur ou ne permet pas une communication correcte avec l'extérieur.

10. Appareil selon l'une ou plusieurs des revendications précédentes, **caractérisé en ce que** l'unité de commande est également configurée pour mettre en œuvre une quatrième stratégie (S4) qui prévoit d'utiliser dans ladite seconde condition, alternativement et en séquence, toujours les deux modules de communication (8, 10) pour transmettre et/ou recevoir les mêmes données.

11. Appareil selon l'une ou plusieurs des revendications précédentes, **caractérisé en ce que** l'unité de commande est également configurée pour mettre en œuvre une cinquième stratégie (S5) qui prévoit d'utiliser ledit second module de communication (10), qui utilise une seconde fréquence ou bande de fréquences étant libre et n'étant pas sous licence, toujours et uniquement (S5) avec une communication de type « walk-by » ou « drive-by ».

12. Appareil selon l'une ou plusieurs des revendications précédentes, **caractérisé en ce que** l'unité de commande est également configurée pour mettre en œuvre une sixième stratégie (S6) qui prévoit d'utiliser ledit second module de communication (10), qui utilise une seconde fréquence ou bande de fréquences étant libre et n'étant pas sous licence, avec un mode de communication uniquement « walk-by » ou « drive-by » (S6) lorsque ces deux modules de communication (8, 10) pour la communication avec le réseau d'infrastructures fixe ne sont plus disponibles ou correctement utilisables.

13. Appareil selon l'une ou plusieurs des revendications précédentes, **caractérisé en ce que** l'unité de commande (4) est programmée pour que la configuration de la stratégie (S1, S2, S4, S5 et S6) pour l'utilisation et/ou la gestion desdits au moins deux modules de communication (8, 10) soit effectuée à distance par l'envoi d'un paquet de données correspondant par l'un desdits deux modules de communication (8, 10).

14. Appareil selon l'une ou plusieurs des revendications précédentes, **caractérisé en ce que** l'unité de commande (4) est configurée pour mettre en œuvre au moins deux desdites stratégies (S1, S2, S4, S5 et S6) et de telle sorte que la sélection de la stratégie à utiliser s'effectue automatiquement et/ou suite à la réception d'une commande envoyée à distance via au moins l'un desdits deux modules de communication (8, 10) et/ou suite à la réception d'une commande établie par un opérateur agissant sur une interface utilisateur (16) dont l'appareil lui-même est équipé.

15. Appareil selon l'une ou plusieurs des revendications précédentes, **caractérisé en ce que** :
- l'unité de commande (4) est programmée de manière à ce que sa configuration pour l'utilisation et/ou la gestion des deux modules de communication (8, 10) soit effectuée à distance par l'envoi d'un paquet de données correspondant par l'un desdits modules de communication (8, 10), et
- ladite configuration de l'unité de commande à régler à distance définit
- quand passer dans ladite seconde condition, et/ou
- quelles sont lesdites données à transmettre avec les deux modules (8, 10), et/ou
- le contenu de certaines desdites données à transmettre avec les deux modules (8, 10).
